# EUROPÄISCHE PATENTSCHRIFT

(11) **EP 1 130 763 B1**
(45) Veröffentlichungstag und Bekanntmachung des Hinweises auf die Patenterteilung: **30.07.2008**
(21) Anmeldenummer: 01100426.4
(22) Anmeldetag: 08.01.2001
(51) Int. Cl.: H02P 9/02

(54) **Einrichtung zur Erfassung des Drehmoments eines Generators eines Kraftfahrzeugs**
Torque sensor for a vehicle generator
Capteur de couple pour générateur d'un véhicule

(30) Priorität: 12.01.2000 DE 10000920
(43) Veröffentlichungstag der Anmeldung: 05.09.2001
(73) Patentinhaber: Volkswagen Aktiengesellschaft, 38436 Wolfsburg (DE)
(72) Erfinder: Michels, Karsten, Dr., 38165 Lehre (DE)

(56) Entgegenhaltungen:
- EP-A- 0 783 994
- WO-A-99/21261
- US-A- 5 264 764
- US-A- 5 952 586

## Beschreibung

Die Erfindung betrifft eine Einrichtung zur Erfassung des Drehmoments eines vom Motor eines Kraftfahrzeuges angetriebenen Generators gemäß Oberbegriff des Anspruchs 1.

Der Motor eines Kraftfahrzeugs wird entsprechend der sich ständig ändernden Leistungsanforderung von einem Motorsteuergerät gesteuert. Die an den Motor des Kraftfahrzeuges gestellte Leistungsanforderung hängt dabei nicht nur von der Fahrgeschwindigkeit und anderen Fahrparametern ab, sondern auch von den Leistungsanforderungen, die an den Generator im Fahrzeug gestellt werden. Die vom Generator zu erbringende Leistung ist beispielsweise abhängig von den jeweils eingeschalteten elektrischen Verbrauchern und erfordert ein entsprechend unterschiedliches Drehmoment. Die Drehmomentanforderung wird in heutigen Motorsteuergeräten als Eingangsgröße für die Steuerung des Motors benutzt, wobei das vom Generator an der Kurbelwelle aufgenommene Drehmoment im Motorsteuergerät unter Berücksichtigung des Auslastungsgrades des Generators, der Generatordrehzahl und des Generatortyps berechnet werden kann. Als Korrekturgrößen können dabei zur Erhöhung der Rechengenauigkeit auch die Spannung und die abgeschätzte Generatortemperatur herangezogen werden. Dies erfordert einen aufwendigen Datenfluss zwischen Generator und Motorsteuergerät, um die zur Berechnung erforderlichen Daten zum Motorsteuergerät zu übertragen.

Aus der US-5,952,586 ist eine Einrichtung zur Erfassung des Drehmomentes eines vom Motor eines Kraftfahrzeuges angetriebenen Generators bekannt, wobei das für den Generator erforderliche Drehmoment unter Berücksichtigung mehrerer Generatorparameter ermittelt und in einem Motorsteuergerät zur Steuerung des Motors berücksichtigt wird.

Aus der EP 0 783 994 A1 ist ein Steuerungssystem für einen Generator eines Kraftfahrzeuges bekannt, wobei der Generatorregler über eine bidirektionale Schnittstelle mit einem Motorsteuergerät verbunden ist, wobei der Generatorregler den Auslastungsgrad des Generators an das Motorsteuergerät überträgt.

Der Erfindung liegt die Aufgabe zugrunde, eine Einrichtung zur Erfassung des Drehmoments eines vom Motor eines vom Kraftfahrzeug angetriebenen Generators zu schaffen, mit der eine Reduzierung des Datenflusses zwischen Generator und Motorsteuergerät erreicht wird.

Die Lösung dieser Aufgabe erhält man durch die im Anspruch 1 angegebenen Merkmale. Ein im Generator angeordneter Prozessor ermittelt aus den im Generator vorliegenden Generatorparametern die aktuelle Generatorleistung, aus der unter Berücksichtigung der Generatordrehzahl sich das Drehmoment berechnen lässt. Das Drehmoment kann im Motorsteuergerät berechnet werden, wozu dann vom Generator der für die Generatorleistung ermittelte Leistungswert zum Motorsteuergerät übertragen werden muss. Dadurch erhält man einen stark reduzierten Datenfluss zwischen Generator und Motorsteuergerät.

Es besteht auch die Möglichkeit, dass der Prozessor im Generator selbst das Drehmoment bestimmt und den jeweiligen aktuellen Drehmomentwert zum Motorsteuergerät überträgt. In diesem Fall wird ebenfalls nur ein sehr geringer Datenfluss zwischen Generator und Motorsteuergerät benötigt, da nur der Drehmomentwert zum Motorsteuergerät übertragen werden muss.

In einer bevorzugten Ausführungsform wird auf eine direkte Bestimmung der Generatordrehzahl verzichtet.

Um das vom Motor für den Antrieb des Generators aufzubringende Drehmoment im Prozessor des Generators berechnen zu können, wird die Motordrehzahl und die Übersetzung zwischen Generator und Kurbelwelle des Motors in den Prozessor eingelesen. Anhand der weiteren Parameter, wie Auslastungsgrad, Generatortyp, Spannung und Generatortemperatur kann eine sehr genaue Bestimmung des Drehmoments im Generator erfolgen, so dass der jeweils aktuelle Drehmomentwert vom Motorsteuergerät empfangen und direkt zu Steuerzwecken berücksichtigt werden kann.

Die Erfindung wird nachfolgend anhand von in der Zeichnung dargestellten Ausführungsbeispielen näher erläutert.

Es zeigen:
- Figur 1: ein Blockschaltbild mit einem im Generator angeordneten Prozessor und mit einem Motorsteuergerät, wobei Drehmoment im Generator ermittelt wird, und
- Figur 2: ein Blockschaltbild mit einem im Generator angeordneten Prozessor und mit einem Motorsteuergerät, wobei im Generator die Generatorleistung und im Motorsteuergerät das Drehmoment bestimmt werden.

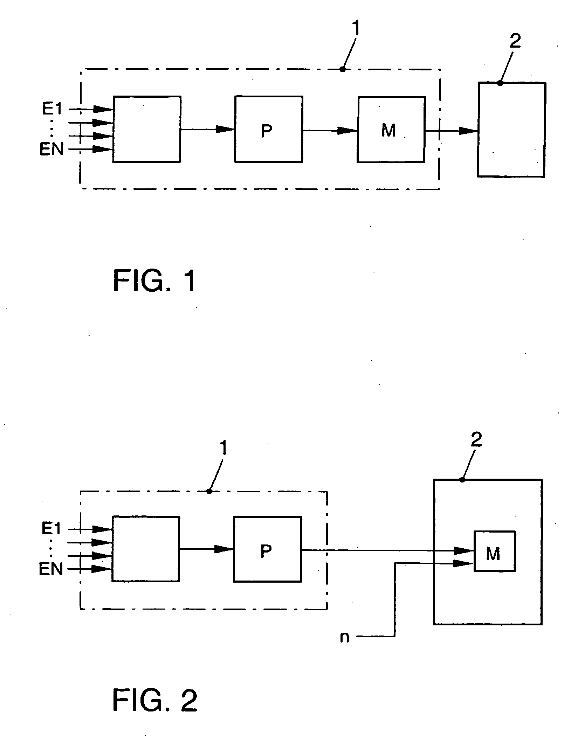

Das Blockschaltbild von Figur 1 veranschaulicht die Ermittlung des Drehmoments M in einem Prozessor 1, der sich in einem von einem Motor angetriebenen Generator befindet. Der Prozessor 1 berücksichtigt zur Ermittlung des Drehmoments M mehrere Eingangsgrößen E1 bis EN, um daraus die Generatorleistung P zu ermitteln. Als Eingangsgrößen E1 bis EN können beispielsweise der Auslastungsgrad des Generators, der Generatortyp, die am Generator anliegende Spannung und die Motordrehzahl und die Übersetzung zwischen Generator und Kurbelwelle am Prozessor 1 anliegen. Dabei kann aus der Generatordrehzahl und der berechneten Generatorleistung P das Drehmoment M bestimmt werden, welches vom Prozessor 1 zum Motorsteuergerät 2 übertragen wird. Das Drehmoment M kann somit im Motorsteuergerät 2 zur Steuerung der erforderlichen Motorleistung herangezogen werden.

Bei der in Figur 2 dargestellten Ausführung ist vorgesehen, dass der Prozessor 1 die Generatorleistung P ermittelt und diese zum Motorsteuergerät 2 überträgt. Dort wird unter Berücksichtigung der Generatordrehzahl n das Drehmoment M ermittelt. Als Eingangsgrößen E1 bis EN sind bei der Ausführungsform von Figur 2 nur Größen erforderlich, die ohnehin im Generator vorliegen, wie die Generatordrehzahl, der Auslastungsgrad des Generators, der Generatortyp, die Generatorspannung und eventuell die Generatortemperatur.

Die beiden in Figur 1 und Figur 2 dargestellten Ausführungsbeispiele veranschaulichen, dass zwischen dem im Generator angeordneten Prozessor 1 und dem Motorsteuergerät 2 ein Datenfluss mit nur sehr geringer Datenmenge stattfindet. Eine Übertragung der im Generator vorhandenen Generatorparameter zum Motorsteuergerät 2 ist insoweit nicht mehr erforderlich, als diese Parameter bereits als Eingangsgrößen E1 bis EN des Prozessors im Generator zur Drehmomentbestimmung oder zur Leistungsbestimmung herangezogen werden können.

### BEZUGSZEICHENLISTE

- 1: Prozessor
- 2: Motorsteuergerät
- E1, EN: Eingangsgrößen
- M: Drehmoment
- n: Generatordrehzahl
- P: Generatorleistung

## Patentansprüche

1. Einrichtung zur Erfassung des Drehmoments eines vom Motor eines Kraftfahrzeugs angetriebenen Generators, wobei das für den Generator erforderliche Drehmoment (M) unter Berücksichtigung mehrerer Generatorparameter ermittelt und in einem Motorsteuergerät (2) zur Steuerung des Motors berücksichtigt wird, **dadurch gekennzeichnet, dass** ein im Generator angeordneter Prozessor (1) aus den am Generator vorliegenden Generatorparametern Auslastungsgrad des Generators, Generatordrehzahl, Generatortemperatur die aktuelle Generatorleistung (P) zur Bestimmung des Drehmoments (M) ermittelt, wobei der Prozessor (1) im Generator das Drehmoment (M) aus der Generatorleistung (P) und der Generatordrehzahl bestimmt und den jeweils aktuellen Drehmomentwert zum Motorsteuergerät (2) überträgt oder der Prozessor (1) die ermittelte Generatorleistung (P) zum Motorsteuergerät (2) überträgt, das aus der Generatorleistung (P) das Drehmoment (M) des Generators ermittelt.

2. Einrichtung nach Anspruch 1, **dadurch gekennzeichnet, dass** zum im Generator angeordneten Prozessor (1) die Drehzahl des Motors übermittelt wird, wobei das Übersetzungsverhältnis zwischen Generator und Kurbelwelle des Motors am Prozessor (1) anliegt.

## Claims

1. Device for sensing the torque of a generator which is driven by the engine of a motor vehicle, wherein the torque (M) which is necessary for the generator is determined by taking into account a plurality of generator parameters and is taken into account in an engine control unit (2) for controlling the engine, **characterized in that** a processor (1) which is arranged in the generator determines the utilization factor of the generator, rotational speed of the generator, the temperature of the generator and the current power (P) of the generator from the generator parameters which are present at the generator in order to determine the torque (M), wherein the processor (1) in the generator determines the torque (M) from the power (P) of the generator and the rotational speed of the generator, and transmits the respective current torque value to the engine control unit (2), or the processor (1) transmits the determined power (P) of the generator to the engine control unit (2) which determines the torque (M) of the generator from the power (P) of the generator.

2. Device,according to Claim 1, **characterized in that** the rotational speed of the engine is sent to the processor (1) which is arranged in the generator, wherein the transmission ratio between the generator and crankshaft of the engine is present at the processor (1).

## Revendications

1. Dispositif pour détecter le couple d'un générateur entraîné par le moteur d'un véhicule automobile, dans lequel le couple (M) nécessaire pour le générateur est détecté en tenant compte de plusieurs paramètres de générateur et est pris en compte dans un appareil de commande de moteur (2) pour la commande du moteur, **caractérisé en ce qu'**un processeur (1) disposé dans le générateur détecte, à partir des paramètres du générateur présents au niveau du générateur, comme le degré d'utilisation du générateur, la vitesse de rotation du générateur, et la température du générateur, la puissance actuelle du générateur (P) pour déterminer le couple (M), le processeur (1) déterminant dans le générateur le couple (M) à partir de la puissance du générateur (P) et de la vitesse de rotation du générateur et transmettant la valeur de couple actuelle respective à l'appareil de commande du moteur (2) ou le processeur (1) transmettant la puissance du générateur (P) détectée à l'appareil de commande du moteur (2), qui détecte le couple (M) du générateur à partir de la puissance du générateur (P).

2. Dispositif selon la revendication 1, **caractérisé en ce que** la vitesse de rotation du moteur est transmise au processeur (1) disposé dans le générateur, le rapport de transmission entre le générateur et le vilebrequin du moteur s'appliquant au processeur (1).
